# EUROPEAN PATENT SPECIFICATION

(11) **EP 0 648 046 B1**
(45) Date of publication and mention of the grant of the patent: **22.12.1999**
(21) Application number: 94115634.1
(22) Date of filing: 05.10.1994
(51) Int. Cl.: H04N 5/44

(54) **Method and apparatus for motion compensated interpolation of intermediate fields or frames**
Verfahren und Vorrichtung zum bewegungsausgeglichenen Interpolieren von zwischenliegenden Halbbildern oder Bildern
Méthode et dispositif pour interpoler avec compensation de mouvement des champs ou des trames intermédiaires

(30) Priority: 11.10.1993 EP 93402505; 02.11.1993 EP 93117662
(43) Date of publication of application: 12.04.1995
(73) Proprietor: THOMSON multimedia, 92648 Boulogne Cédex (FR)
(72) Inventor: Knee, Michael, F-67000 Strasbourg (FR); Kerdranvat, Michel, F-67870 Bischoffsheim (FR); Hackett, Andrew, F-67530 Klingenthal (FR); Bolender, Nadine, F-67000 Strasbourg (FR)
(74) Representative: Hartnack, Wolfgang, Dipl.-Ing.

(56) References cited:
- SIGNAL PROCESSING OF HDTV; 29 FEBRUARY - 2 MARCH 1988,, L'AQUILA, IT pages 393 - 399 FERNANDO ET AL. 'Motion Compensated Display Conversion'
- RESEARCH DISCLOSURE, no.346, February 1993, HAVANT GB ANONYMOUS 'Field Number Conversion Filtering'
- SIGNAL PROCESSING OF HDTV, II; 30 AUGUST - 1 SEPTEMBER 1989;, TURIN, IT pages 649 - 655 HAGHIRI ET AL. 'A Motion Compensated Field Rate Conversion Algorithm'
- IEEE 1990 INTERNATIONAL CONFERENCE ON CONSUMER ELECTRONICS; 6-8 JUNE 1990;, ROSEMONT, US pages 262 - 263 DREIER '100 Hz Conversion with Adaptive Line Flicker Reduction'

## Description

The present invention relates to a method and to an apparatus for motion compensated interpolation of intermediate fields or frames.

### Background

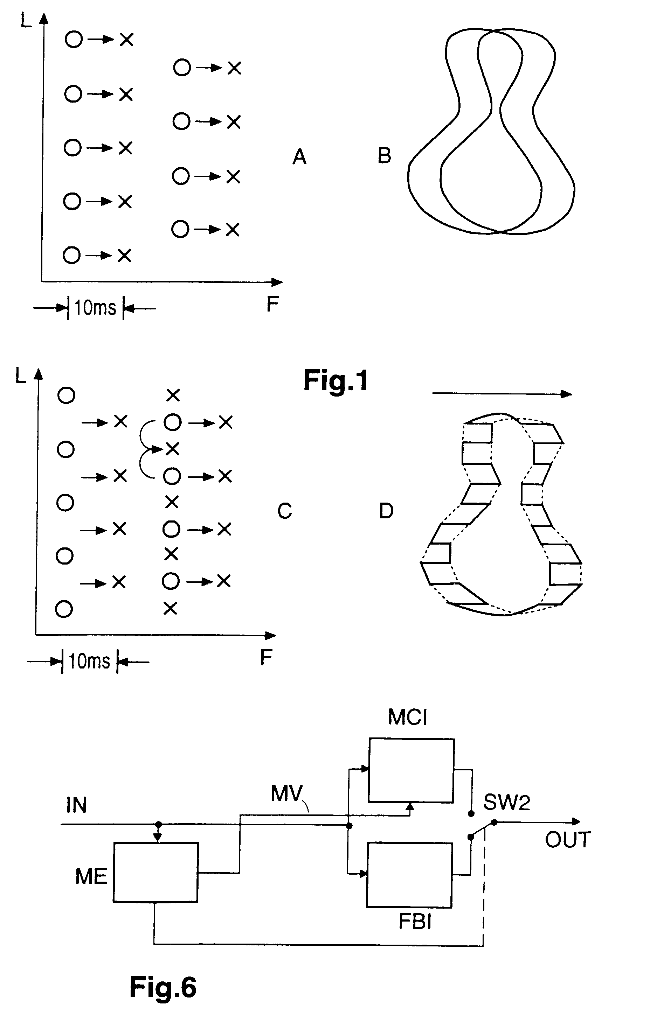

Current television transmission standards in Europe and other parts of the world operate with a 50Hz display refresh rate. One complete image, or frame, is transmitted every 1/25th of a second. Each frame is composed of two half-images, or fields, each one of which is transmitted every 1/50th of a second. Each field consists of either the odd or even lines of a frame.
The process of refreshing a CRT display causes a change of light intensity with time, called flicker. At 50Hz, the human eye is still sensitive to this flicker, and on bright scenes and/or large displays this flicker is noticeable. One method of removing the visibility of this flicker is to refresh the display at a higher frequency. This increase in field rate may be by any arbitrary amount as long as a frequency is chosen which is sufficiently great that the sensitivity of the eye is very low. The frequency used as an example in this description is 100Hz, a doubling in frequency which results in a relatively simple hardware implementation, although in principle, any frequency may be used and 75Hz has also been contemplated.
With the example frequency of 100Hz, there are two scanning patterns which may be used, these are known as AABB and ABAB, where the letters A and B refer to the positions of the odd and even fields F. The arrangements of the two types of scanning is shown in Figures 1A and 1C. Lines L which belong to the original input signal are marked by a 'o' and new lines which must be created are marked by a 'x'.
The data in the new fields may be generated from the original input signal as illustrated by the arrows in Fig. 1. This presents an acceptable picture quality when the images are static.
When the images move, the subjective effect in each case is one of a double image. This is due to the data in the new fields being displayed in the wrong temporal position, and when the eye tracks the motion across the screen, a double image of one form or another results. This effect is shown in Figures 1B and 1D, the latter of which shows 'mouse teeth' artefacts.
This appearance of a double image around moving objects may be reduced or removed by generating the new 100Hz fields with the object in the correct position. This is done by measuring the velocity with which the object is moving and then interpolating the new field using information from the correct position (i.e.from the object) in the source fields. This technique is called motion compensated interpolation, and in this instance is applied to frame/field rate upconversion, but could equally well have other uses, for example in the generation of an improved slow motion video signal, or in standards conversion.
One technique of motion estimation is known as block matching. Typically, the current field or frame of the picture is divided into rectangular blocks. For each block, a search is made over overlapping blocks in the previous field or frame to find the one that matches the current field block the best according to some criterion, typically mean-square or mean absolute error. The relative position of the two blocks gives the displacement, or motion, vector for the current block.
Proceedings of the Second International Workshop on Signal Processing of HDTV, L'Aquila, Italy, 29 February - 2 March 1988, Amsterdam, NL, p.393-399, G.Fernando et al.:"Motion compensated display conversion" discloses a motion compensated interpolation of intermediate pictures wherein also a fallback interpolation is proposed.
Research Disclosure, February 1993, No. 34676, p.132, disclosed anonymously: "Field compensated display conversion" discloses the temporal averaging of fields in order to generate intermediate fields. The additional fields are horizontally lowpass filtered. In order to compensate for the loss of sharpness the input fields high frequencies become accentuated.

### Invention

It is one object of the invention to disclose a method of improved fallback processing. This object is achieved by the method disclosed in claim 1.

It is a further object of the invention to disclose an apparatus which utilises the inventive method. This object is achieved by the apparatus disclosed in claim 6.

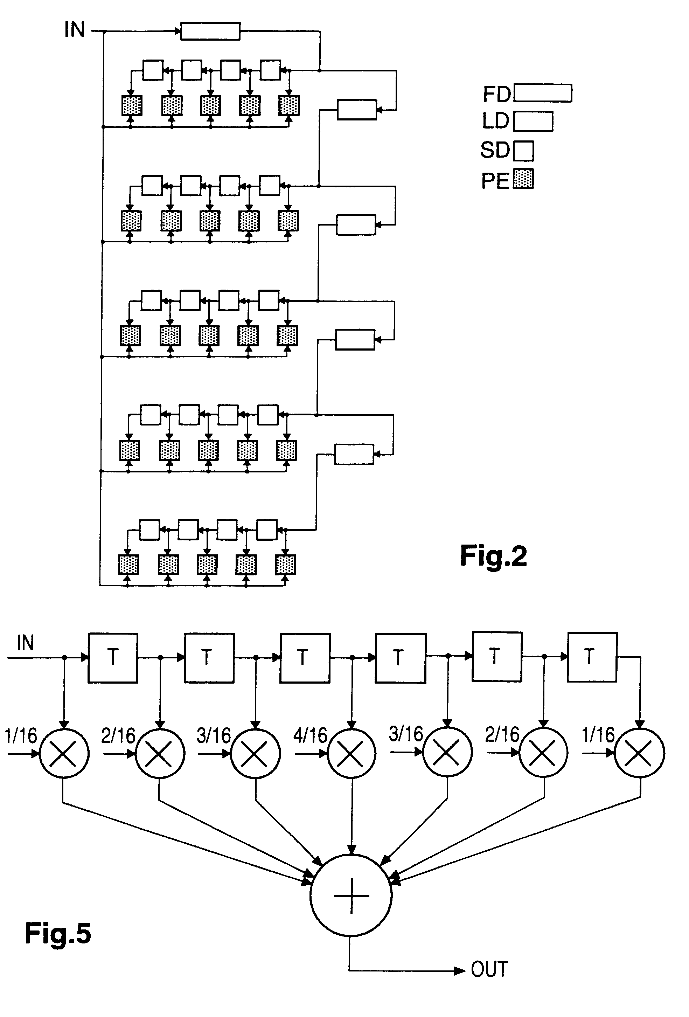

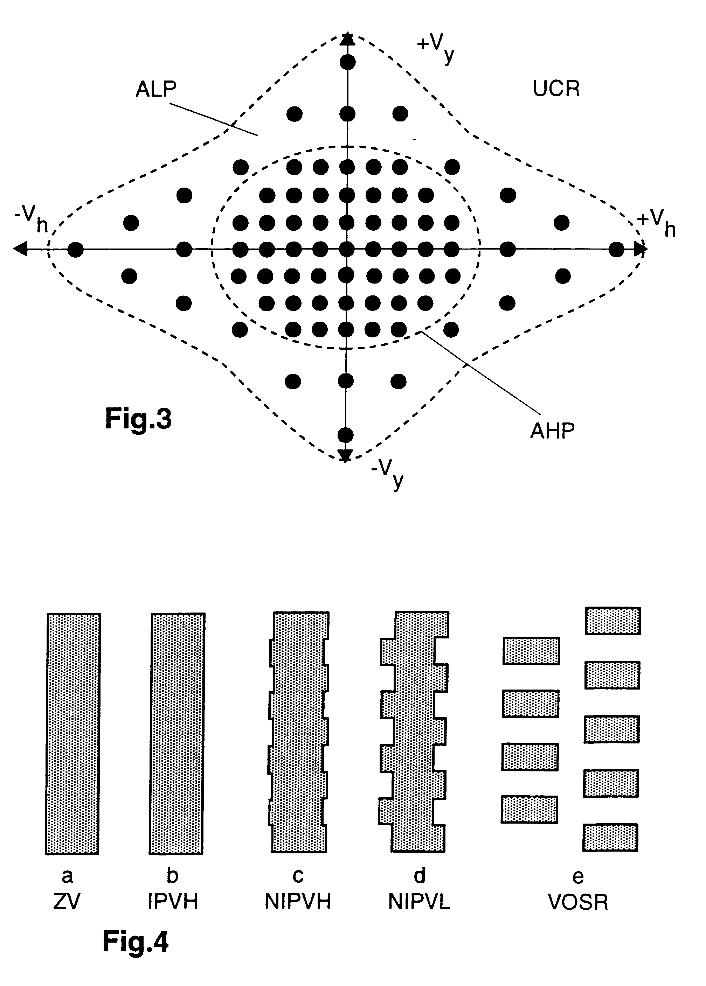

The above described motion estimation principle holds whether single or double sided block matching is used. Double sided block matching and its advantages are described in WO-A-95/07 591 of the applicant.
As block matching is computationally intensive, real-time hardware implementations of this technique implement some form of parallel processing. The most common form is to have one block matching processor per candidate motion vector. An example hardware implementation for a single sided block matching scheme is shown in Fig. 2. This implementation allows the measurement of velocities of up to ±2 pixels or lines in the horizontal and vertical directions. Each processing element matches, in parallel, the current block with those in the previous field or frame displaced by ±2 pixels or lines.
In order to give good results in all cases, the block search range should cover all possible motion vectors which may be present in the incoming signal. As the number of processing elements is directly related to the complexity, and hence cost, of the hardware implementation, there is some incentive to minimise the number of candidate vectors which must be checked.
As described in EP-A- 639 926 of the applicant, one method of reducing the hardware cost is to cover only a limited range of possible motion vectors within the image, and to cover some of this range with reduced precision.
An example of this related to motion compensated frame/field rate upconversion is shown in Fig. 3 where '•' is a site of a motion vector processor in the two-dimensional velocity space V_{y}/Vₓ. The motion estimation is performed (within area AHP of high precision) with a good precision of small or slow motion and as the velocity of the object increases, the precision of the estimation decreases (within area ALP of low precision). Finally, there is a limiting velocity (uncompensated region UCR) beyond which no motion estimation is performed and where compensation is therefore impossible and a fallback processing is required instead. It is with respect to this uncompensated region that the present invention relates. In addition, the invention is applicable to both scanning types shown in Fig. lA and Fig. 1B.
As already mentioned, economic factors rule against the implementation of a motion compensated upconversion scheme which is capable of applying motion compensated upconversion for all possible velocities of objects which may be contained within the incoming television signal. The fallback processing treats the case where the velocity of an object, or pan across a scene exceeds the maximum velocity supported by the motion estimation system. Fig. 4 shows one possible effect at the edge of a moving object as the object accelerates through the range of velocities shown in Fig. 3, when viewed after a typical upconversion process. The object starts from rest (zero velocity ZV, Fig. 4a). As the object accelerates, the error in the motion is well compensated (integer pixel velocity IPVH and non-integer pixel velocity NIPVH in region AHP of high precision) until the region of lower precision measurement is reached (non-integer pixel velocity NIPVL in region ALP of low precision), which can be considered acceptable as the human visual system does not register such small defects on an object moving with a relatively high velocity. What is unacceptable, is the abrupt change as the edge of the motion compensated velocity region is crossed (velocity VOSR outside of supported region AHP and ALP). The image will abruptly change from the appearance in Fig. 4b, 4c or 4d to that of Fig. 4e.
Referring back to Fig. 1A and 1C, it can be seen that this will result in a sudden change in parts of the image, from a high quality single moving image to a low quality double image, with or without 'mouse-teeth' depending on the type of upconversion in use. It is the purpose of the inventive fallback processing to improve the subjective appearance of images moving with a velocity too large to be correctly compensated.
It can be seen from Fig. 1 that the images which are in the wrong temporal position are those of the new fields (marked by 'x's). Considering the case in Fig. 1A of the AABB type scanning (ABAB is similar), the complete image is already present in the correct temporal position in the original fields.
When motion compensated processing is impossible, the new fields may be generated by non-compensated methods, such as repeating the original fields, or by generating a progressive scan image and delaying alternate lines by 10ms. The subjective appearance of the double image is than significantly improved by heavily low pass filtering the new fields in the horizontal direction. The filtering must be active over a region comparable in size to the double image.
The effect of this filtering is to remove any significant detail from the newly interpolated fields. The filtering process blurs the fields which are displayed with information in the wrong temporal position. This blurring in every second field of a 100Hz video signal is acceptable as the human visual system does not register it on an object moving with high velocity. As detail is only present in fields with information present in the correct temporal position, the subjective strength of the double image is greatly reduced, resulting in a greatly improved subjective picture quality. In this implementation, the fallback processing is applied to the new fields when a motion vector cannot be determined, that is normally when the velocity lies in the uncompensated region UCR.

In principle, the inventive method is suited for motion compensated interpolation of intermediate fields or frames of a input video signal using pixel block motion vectors, whereby in case of related motion velocities extending a preselected range or in case said motion vectors cannot be determined a fallback interpolation is performed in which pixel values of the intermediate fields or frames only are lowpass filtered horizontally and whereby the filtering is active over a region comparable in size of double image artefacts caused by the missing motion compensated interpolation.

Advantageous additional embodiments of the inventive method are resulting from the respective dependent claims.

In principle the inventive apparatus for motion compensated interpolation of intermediate fields or frames of a input video signal using pixel block motion vectors includes:
- motion compensated interpolation means and fallback interpolation means which receive said input video signal and the output pixel values of which are selected in switching means in relation to said motion vector or its horizontal component, whereby in said fallback interpolation means pixel values of the intermediate fields or frames only are lowpass filtered horizontally and whereby the filtering is active over a region comparable in size of double image artefacts caused by the missing motion compensated interpolation;
- motion estimation means which calculate from said input signal, or motion information extractor means which extract from the transmitted input signal data stream, said block based motion vector and/or its horizontal component, whereby in case of said motion vector or its horizontal component extending a preselected range or in case of said motion vector cannot be determined said fallback interpolation means are selected by said switching means.

Advantageous additional embodiments of the inventive apparatus are resulting from the respective dependent claims.

### Drawings

Preferred embodiments of the invention are described with reference to the accompanying drawings, which show in:
- Fig. 1: AABB and ABAB scanning for upconversion and resulting artefacts;
- Fig. 2: typical architecture for one-sided block matching;
- Fig. 3: example configuration of reduced coverage of motion vector processors;
- Fig. 4: appearance of a moving object accelerating horizontally through the velocity space of Fig. 3;
- Fig. 5: fallback processing low pass filter;
- Fig. 6: simplified block diagram of inventive apparatus.

### Preferred embodiments

Fig. 2 shows a possible architecture for one-sided block matching motion estimators with a range of ±2 pixels per field horizontally and vertically, to integer accuracy. The architecture is based on processing elements PE, one per candidate motion vector. Each processing element PE accumulates the errors between the pixels (which form a group related to a candidate block position and vector, respectively) arriving at its two inputs, storing partial results in order to arrive at a total error for each block. The processing elements are connected together by means not shown in the Figures in order to find which one yields the minimum error for each block. The processing elements may calculate the minimum absolute value or the minimum squared error.
All the processing elements PE have a common input IN, corresponding to the current block. The relative displacements between the pixels in the search window are provided by a network of line LD and sample SD delays that follow the field delay FD connected to input INP.

The fallback processing low pass filter in Fig. 5 passes the input signal (i.e. the 'x' pixels in the lines of Fig. 1) through a chain of one horizontal sample delays T. The respective delayed output pixel values and the pixel values of the input signal IN are multiplied by the filter coefficients 1/16, 2/16, 3/16, 4/16, 3/16, 2/16, 1/16 in multipliers X. The multiplier outputs are combined in adder '+' to form the final output pixel values OUT for the intermediate fields.

In Fig. 6 the 50/60Hz input signal IN passes through a motion compensated interpolation circuit MCI or a fallback interpolation circuit FBI and a switch SW to the 100/120Hz output. Circuit ME can be a motion estimator which calculates related motion vectors MV from the input signal IN and controls switch SW by detecting strongly moving picture areas in which no motion estimation can be performed. This information can also be transmitted if the motion estimator is located within a transmitter and the circuit of Fig. 6 is part of a receiver, e.g. a TV receiver. Then, circuit ME may extract the motion vector MV and the information on non-motion estimated picture areas from the transmitted input signal data stream. The motion information is used in interpolator MCI to perform the motion compensated interpolation of the intermediate fields. Switch SW can also operate as a soft switch smoothing the MCI/FBI transition at the outer boundary of area ALP. Circuit ME may include a circuit according to Fig. 2. Interpolation circuit FBI may include a filter according to Fig. 5.

In the case of a uniform moving edge, the motion vector is only valid in the direction perpendicular to the edge. In the example given, the fallback processing is limited (for reasons of cost) to horizontal filtering. Therefore, one implementation could be to limit the application of the fallback mode to cases when the horizontal component of the velocity only is out of range (i.e. in the case of edges, operate solely on vertical edges).
Another possibility, as described in the accompanying patent application EP-A- 648 047 of the applicant could be to control the application of the fallback mode processing through some intermediate form of vector conditioning, such as a measure of confidence.

The invention can also be used for standards conversion, bit rate reduction, digital HDTV, digital VCR, digital video disc player and MPEG1 or MPEG2 devices (IEC/ISO standard).

## Claims

1. Method for motion compensated interpolation (MCI) of intermediate fields or frames (x) of an input video signal using pixel block motion vectors, wherein also a fallback interpolation (FBI) is provided, **characterised** in that said fallback interpolation is carried out in case the horizontal component of image movement exceeding a velocity (Vₕ) too large to be correctly compensated, wherein pixel values of the intermediate fields or frames only are lowpass filtered (T, X, +) horizontally in such a way that the filtering is active over a region comparable in size of double image artefacts caused by the missing motion compensated interpolation.

2. Method according to claim 1, wherein said motion compensated interpolation (MCI) is carried out with a higher motion estimation precision for slower motion (AHP) and with a lower motion estimation precision for faster motion (ALP) which is still not too large to be correctly compensated.

3. Method according to claim 1 or 2, wherein said fallback interpolation (FBI) is performed in relation to a measure of confidence of said motion vector (MV).

4. Method according to any of claims 1 to 3, wherein a soft switching (SW) is performed between said motion compensated interpolation (MCI) and said fallback interpolation (FBI).

5. Method according to any of claims 1 to 4, wherein said fallback interpolation (FBI) is carried out in case a motion vector cannot be determined.

6. Apparatus for motion compensated interpolation (MCI) of intermediate fields or frames (x) of an input video signal using pixel block motion vectors, related to a method according to any of claims 1 to 4 and including:
- motion compensated interpolation means (MCI) and fallback interpolation means (FBI) which receive said input video signal (IN) and the output pixel values of which are selected in switching means (SW) in relation to said motion vector (MV) or its horizontal component (Vₕ), whereby in said fallback interpolation means pixel values of the intermediate fields or frames (x) only are lowpass filtered (T, X, +) horizontally and whereby the filtering is active over a region comparable in size of double image artefacts caused by the missing motion compensated interpolation;
- motion estimation means (ME) which calculate from said input video signal (IN), or motion information extractor means (ME) which extract from the transmitted input video signal data stream, said block based motion vector (MV) and/or its horizontal component (Vₕ), whereby in case the horizontal component of said motion vector exceeding a velocity (Vₕ) too large to be correctly compensated said fallback interpolation means (FBI) are selected by said switching means (SW).

7. Apparatus according to claim 6, wherein said switching means (SW) are soft switching means.

8. A digital TV or HDTV receiver comprising an apparatus according to claim 6 or 7.

9. A digital VCR comprising an apparatus according to claim 6 or 7.

10. A digital video disc player comprising an apparatus according to claim 6 or 7.

## Patentansprüche

1. Verfahren zur bewegungskompensierten Interpolation (MCI) von Zwischen-Halbbildern oder -Vollbildern (x) eines Video-Eingangssigals unter Verwendung von Pixel-Block-Bewegungs-Vektoren, wobei auch eine Fallback-Interpolation (FBI) vorgesehen ist, dadurch gekennzeichnet, daß die Fallback-Interpolation in dem Fall ausgeführt wird, daß die horizontale Komponente der Bildbewegung eine Geschwindigkeit Vₕ überschreitet, die für eine richtige Kompensation zu groß ist, wobei die Pixelwerte der Zwischen-Halbbilder oder Vollbilder nur horizontal in einer solchen Weise tiefpaßgefiltert werden (T, X, +), daß die Filterung über einem Bereich wirksam ist, der mit der Größe von Doppelbild-Artefakten vergleichbar ist, die durch die fehlende bewegungskompensierte Interpolation verursacht werden.

2. Verfahren nach Anspruch 1, bei dem die bewegungskompensierte Interpolation (MCI) mit einer höheren Bewegungs-Abschätzungs-Genauigkeit für langsamere Bewegungen (AHP) und mit einer niedrigeren Bewegungs-Abschätzungs-Genauigkeit für schnellere Bewegungen (ACP), die für eine genaue Kompensation noch nicht zu groß ist, durchgeführt wird.

3. Verfahren nach Anspruch 1 oder 2, bei dem die Fallback-Interpolation (FBI) in Relation zu einer Vertrauensmaßnahme des Bewegungs-Vektors (MV) durchgeführt wird.

4. Verfahren nach einem der Ansprüche 1 bis 3, bei dem eine Überblendschaltung (SW) zwischen der bewegungskompensierten Interpolation (MCI) und der Fallback-Interpolation (FBI) durchgeführt wird.

5. Verfahren nach einem der Ansprüche 1 bis 4, bei dem die Fallback-Interpolation (FBI) durchgeführt wird, falls ein Bewegungs-Vektor nicht bestimmt werden kann.

6. Vorrichtung zur bewegungskompensierten Interpolation (MCI) von Zwischen-Halbbildern oder -Vollbildern (x) eines Video-Eingangssignals unter Verwendung von Pixel-Block-Bewegungs-Vektoren, gemäß einem Verfahren nach einem der Ansprüche 1 bis 4, umfassend:
- bewegungskompensierte Interpolationsmittel (MCI) und Fallback-Interpolationsmittel (FBI), die das Video-Eingangssignal (Video) empfangen und deren Ausgangs-Pixelwerte in Schaltmitteln (SW) in bezug auf den Bewegungs-Vektor (MV) oder seine horizontale Komponente (Vₕ) ausgewählt werden, wobei in den Fallback-Interpolationsmitteln Pixelwerte der Zwischen-Halbbilder oder -Vollbilder (x) nur horizontal tiefpaßgefiltert werden (T, X, +), und wobei die Filterung über einem Bereich aktiv ist, der mit der Größe von Doppelbild-Artefakten vergleichbar ist, die durch die fehlende bewegungskompensierte Interpolation verursacht werden;
- Bewegungs-Abschätzungsmittel (ME), die aus dem Eingangs-Videosignal (IN) oder den Bewegungs-Informations-Herausziehmitteln (ME), die die Information aus dem Video-Eingangssignal-Datenstrom herausziehen, den Block-Basis-Bewegungs-Vektor (MV) und/oder seine horizontale Komponente (Vₕ) berechnen, wobei für den Fall, daß die horizontale Komponente des Bewegungs-Vektors eine Geschwindigkeit (Vₕ) überschreitet, die zu groß ist, um genau kompensiert zu werden, die Fallback-Interpolationsmittel (FPI) von den Schaltmitteln (SW) ausgewählt werden.

7. Vorrichtung nach Anspruch 6, bei der die Schaltmittel (SW) Überblend-Schaltmittel sind.

8. Digitaler Fernseh- oder HDTV-Empfänger umfassend eine Vorrichtung nach Anspruch 6 oder 7.

9. Digitaler Video-Kassettenrecorder umfassend eine Vorrichtung nach Anspruch 6 oder 7.

10. Digitaler Video-Plattenspieler umfassend eine Vorrichtung nach Anspruch 6 oder 7.

## Revendications

1. Procédé d'interpolation à mouvement compensé (MCI) de trames ou d'images complètes intermédiaires (x) d'un signal vidéo d'entrée utilisant des vecteurs mouvement à blocs de pixels, dans lequel une interpolation de repli (FBI) est également prévue, **caractérisé** en ce que ladite interpolation de repli est mise en oeuvre dans le cas où la composante horizontale du mouvement d'image excède une vitesse (Vₕ) trop grande pour être correctement compensée, seules des valeurs de pixels des trames ou des images complètes intermédiaires faisant l'objet d'un filtrage passe-bas (T, X, +) horizontal de manière à ce que le filtrage soit actif sur une région de taille comparable à celle d'artefacts d'image double provoqués par l'absence d'interpolation à mouvement compensé.

2. Procédé selon la revendication 1, dans lequel ladite interpolation à mouvement compensé (MCI) est mise en oeuvre avec une précision d'estimation du mouvement supérieure pour un mouvement plus lent (AHP) et avec une précision d'estimation du mouvement inférieure pour un mouvement plus rapide (ALP) qui n'est toujours pas trop important pour être correctement compensé.

3. Procédé selon la revendication 1 ou 2, dans lequel ladite interpolation de repli (FBI) est effectuée par rapport à une mesure de confiance dudit vecteur mouvement (MV).

4. Procédé selon l'une quelconque des revendications 1 à 3, dans lequel une commutation douce (SW) est effectuée entre ladite interpolation à mouvement compensé (MCI) et ladite interpolation de repli (FBI).

5. Procédé selon l'une quelconque des revendications 1 à 4, dans lequel ladite interpolation de repli (FBI) est mise en oeuvre dans le cas où il n'est pas possible de déterminer un vecteur mouvement.

6. Dispositif d'interpolation à mouvement compensé (MCI) de trames ou d'images complètes intermédiaires (x) d'un signal vidéo d'entrée utilisant des vecteurs mouvement à blocs de pixels, lié à un procédé selon l'une quelconque des revendications 1 à 4 et comportant:
- un moyen d'interpolation à mouvement compensé (MCI) et un moyen d'interpolation de repli (FBI) qui reçoivent ledit signal vidéo d'entrée (IN) et dont les valeurs de pixels de sortie sont sélectionnées dans un moyen de commutation (SW) par rapport audit vecteur mouvement (MV) ou à sa composante horizontale (Vₕ), de sorte que dans ledit moyen d'interpolation de repli, seules les valeurs de pixels des trames ou des images complètes intermédiaires (x) fassent l'objet d'un filtrage passe-bas (T, X, +) horizontal et de sorte que le filtrage soit actif sur une région de taille comparable à celle d'artefacts d'image double provoqués par l'absence d'interpolation à mouvement compensé;
- un moyen d'estimation du mouvement (ME) qui calcule à partir dudit signal vidéo d'entrée (IN), ou un moyen d'extraction d'informations de mouvement (ME) qui extrait à partir du flux d'informations transmis du signal vidéo d'entrée, ledit vecteur mouvement (MV) à base de blocs et/ou sa composante horizontale (Vₕ), de sorte que, dans le cas où la composante horizontale dudit vecteur mouvement excède une vitesse (Vₕ) trop grande pour être correctement compensée, ledit moyen d'interpolation de repli (FBI) est sélectionné par ledit moyen de commutation (SW).

7. Dispositif selon la revendication 6, dans lequel ledit moyen de commutation (SW) est un moyen de commutation douce.

8. Récepteur de télévision ou de télévision haute définition numérique comprenant un dispositif selon la revendication 6 ou 7.

9. Magnétoscope à cassettes numérique comprenant un dispositif selon la revendication 6 ou 7.

10. Lecteur de vidéodisques numérique comprenant un dispositif selon la revendication 6 ou 7.
